Europäisches Patentamt

European Patent Office

Office européen des brevets

(11) Veröffentlichungsnummer : **0 054 765**
**B1**

# (12) EUROPÄISCHE PATENTSCHRIFT

(45) Veröffentlichungstag der Patentschrift :
**21.11.85**

(21) Anmeldenummer : **81110028.8**

(22) Anmeldetag : **01.12.81**

(51) Int. Cl.⁴ : **B 32 B 15/01**, B 32 B 13/02,
B 32 B 27/20

(54) Verfahren zum Herstellen eines aluminierten Gusses.

(30) Priorität : **22.12.80 US 218962**

(43) Veröffentlichungstag der Anmeldung :
**30.06.82 Patentblatt 82/26**

(45) Bekanntmachung des Hinweises auf die Patenterteilung : **21.11.85 Patentblatt 85/47**

(84) Benannte Vertragsstaaten :
**BE DE FR GB**

(56) Entgegenhaltungen :
DE-A- 2 139 880
FR-A- 1 265 162
FR-A- 2 153 195
US-A- 1 155 974

(73) Patentinhaber : **ABEX CORPORATION**
**Six Landmark Square P.O. Box 10268**
**Stamford, Connecticut 06904-2268 (US)**

(72) Erfinder : **Khandros, Igor Y.**
**814 Washington Street**
**Hoboken New Jersey 07030 (US)**
Erfinder : **Heyer, Bruce A.**
**205 Overlook Place**
**Mahwah New Jersey 07430 (US)**

(74) Vertreter : **Fischer, Wolf-Dieter, Dipl.-Ing.**
**Patentanwälte Dipl.-Ing. A.H. Fischer Dipl.-Ing. W.D.**
**Fischer Kurfürstenstrasse 32**
**D-6700 Ludwigshafen/Rhein (DE)**

**Beschreibung**

Die Erfindung bezieht sich auf ein Verfahren zum Herstellen eines auf der inneren Oberfläche aluminisierten Schleudergußgegenstands aus einer Metallegierung, bei welchem eine geschmolzene Legierung in eine rotierende Schleuderform von einem Ende derselben eingegossen und in der Form auf gleichmäßige Wandstärke ausbreiten und erstarren gelassen wird.

Es ist bekannt, die Oberfläche von Stahlgegenständen mit Aluminium zu behandeln, um aluminiumreiche Überzüge hoher Korrosionsfestigkeit herzustellen. Bei einem der ersten Verfahren, das aus der US-Patentschrift 1 155 974 bekannt ist, wird der zu aluminisierende Gegenstand in Aluminiumpulver gepackt und erhitzt. Bei einer anderen Arbeitsweise wird der zu aluminisierende Gegenstand in einen luftdichten Behälter eingeschlossen, der teilweise mit einer Mischung aus metallischem Aluminium), Aluminiumoxid und Halogenidverbindungen gefüllt ist. Der Behälter wird in einen Ofen eingebracht, der eine Temperatur bis zu 982 °C hat, und verbleibt dort eine längere Zeit. Das Aluminium diffundiert in das Substrat aus der Dampfphase, die aus fortlaufend gebildeten Aluminiumhalogeniden besteht. Es ist auch bekannt, die Aluminisierung durch Besprühen mit flüssigem Aluminium oder durch Eintauchen in heißes Aluminium durchzuführen.

Die Stärke der aluminiumlegierten Schicht hängt von der Art des Substrats ab. Wenn beispielsweise rostfreier Stahl (V2A) aluminisiert wird, dann kann eine legierte Schichtstärke bis zu etwa 0,075 mm erreicht werden.

Verfahren dieser Art sind bereits zum Aluminisieren von durch Schleuderguß oder Ziehen hergestellten Rohren verwendet worden. Die Verfahren sind aber zum Teil kostspielig und gestatten in jedem Fall nur die Herstellung sehr dünner Diffusionsschichten. Die Lebensdauer von Gegenständen unter erschwerten Bedingungen der Oxidation und Korrosion bei hohen Temperaturen wird durch das Aluminisieren verlängert. Die Verlängerung der Lebensdauer ergibt sich dadurch, daß beim Aluminisieren zäh haftende und widerstandsfähige Oxide gebildet werden. Es ist ersichtlich, daß die Schutzwirkung von der Stärke der aluminisierten Schicht abhängt.

Ziel der Erfindung war es, ein Verfahren zur Herstellung eines auf der inneren Oberfläche aluminisierten Schleudergußgegenstands aus einer Metallegierung zur Verfügung zu stellen, welches die Erzielung wesentlich dickerer aluminiumlegierter Schichten gestattet.

Erfindungsgemäß wird dieses Ziel dadurch erreicht, daß bei einem Verfahren der eingangs näher bezeichneten Art vor dem Erstarren unter fortgesetzter Rotation der Form vom anderen Ende derselben auf die geschmolzene Legierung ein Aluminisierungsmetall aufgegossen wird und daß nach dem Erstarren des Gußstücks die aluminisierte Oberfläche der Legierung dadurch freigelegt wird, daß die darüberliegende Schicht zersetzt oder zersetzen gelassen oder anderweitig entfernt wird.

Aus der EP-Patentanmeldung 43 999 ist ein Verfahren zur Herstellung eines Schleudergußteils bekannt, welches zum Ziel hat, hitzebeständige Eisenlegierungen mit Aluminium zu legieren, um teure Legierungsbestandteile, wie z. B. Chrom, zu verringern. Bei diesem Verfahren wird in die rotierende Schleudergußform zunächst geschmolzenes Aluminium eingegossen und verfestigen gelassen. Dann wird die flüssige Eisenlegierung eingegossen, die aufgrund ihres höheren Schmelzpunkts das gebildete und bereits verfestigte Aluminiumrohr zum Schmelzen bringt. Aufgrund der geringeren Dichte des Aluminiums wandert das geschmolzene Aluminium dann durch die Eisenlegierung hindurch, wobei Aluminium in die hitzebeständige Eisenlegierung aufgenommen wird. Bei diesem Verfahren bildet sich auf der Innenseite des Rohrs eine aluminiumreiche Schicht mit Ausfällungen von intermetallischen Phasen und Carbiden.

Beim erfindungsgemäßen Verfahren diffundiert geschmolzenes Aluminium in das geschmolzene Metall, auf dem der Schleudergußgegenstand hergestellt wird. Dies gestattet eine wesentlich raschere Diffusion und damit die Erzielung dickerer aluminiumlegierter Schichten in einer vernünftigen Zeit. Aus der Literatur kann entnommen werden, daß der Diffusionskoeffizient von Aluminium in geschmolzenem Eisen um einen Faktor von $10^5$ größer ist als in festem Eisen bei 950 °C. Daraus ergibt sich, daß beim erfindungsgemäßen Verfahren in einer Minute eine Diffusionsschicht mit einer Stärke erreicht wird, die beim Eindiffundieren von geschmolzenem Aluminium in Eisen von 950 °C nur in einer Zeit von 1 680 Stunden zustande gebracht werden kann.

Das erfindungsgemäße Verfahren kann bei jeder beliebigen Legierung durchgeführt werden, die sich für eine Aluminisierung eignet. Die folgende hitzebeständige Legierung hat sich als besonders geeignet erwiesen :

| C % | Ni % | Cr % | Si % | Mn % | Fe % |
|------|------|------|------|------|------|
| 0,40 | 37 | 19 | 1,2 | 0,50 | Rest (41,9) |

Als Aluminisierungsmaterial ist die Legierung A 356 besonders geeignet, welche aus Aluminium plus 7 % Silicium besteht.

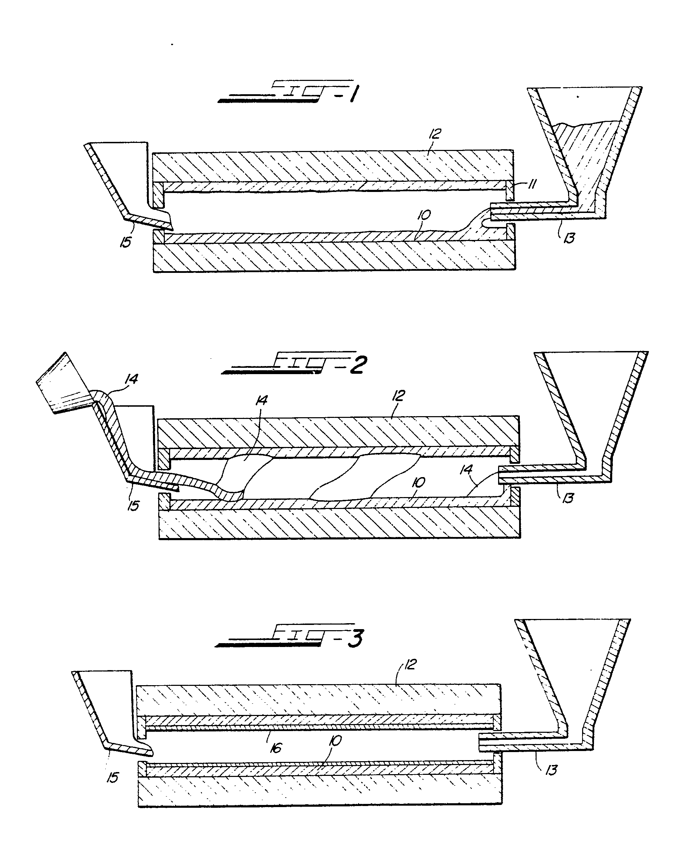

Das erfindungsgemäße Verfahren kann mit einer Vorrichtung durchgeführt werden, wie sie in den beigefügten Figuren 1 bis 3 dargestellt ist. Eine Schleudergußform aus Stahl kann beispielsweise eine Länge von 1,524 m und einen Innendurchmesser von 127 mm aufweisen. Die innere Oberfläche der Form ist üblicherweise mit einem besonderen Überzug versehen, wie er beim Schleudergußverfahren üblich ist.

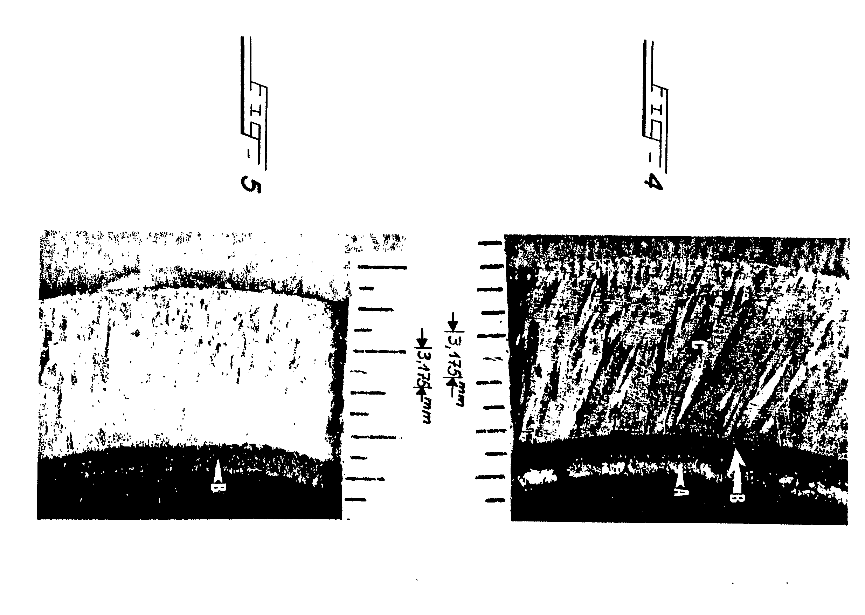

Beim erfindungsgemäßen Verfahren wird geschmolzene hitzebeständige Legierung 10 (siehe Figur 1) in eine rotierende Schleudergußform 12 durch einen Ausguß 13 eingegossen. Nachdem das geschmolzene Metall eine einheitliche Wandstärke erreicht hat und zur Ruhe gekommen ist, wird geschmolzene Aluminiumlegierung 14 (siehe Figur 2) von dem gegenüberliegenden Ende der Form durch eine Schütte 15 eingegossen. Zwischen dem ersten und zweiten Eingießen beträgt das Zeitintervall gewöhnlich 5 bis 15 Sekunden.

Wenn das geschmolzene Aluminiummetall über das geschmolzene Grundmetall fließt, findet eine Diffusion von Aluminium in die Legierung statt, wobei aufgrund einer beträchtlichen Entwicklung von Lösungswärme die örtliche Temperatur steigt. Dieses Phänomen gewährleistet, daß die relativ dünne Schicht des geschmolzenen Aluminiums die ganze Länge des Rohrs entlangfließt. Außerdem wird aufgrund dieses Phänomens die Diffusionsgeschwindigkeit erhöht.

Beim erfindungsgemäßen Verfahren laufen zwei widerstreitende Vorgänge ab. Da das Aluminium mit der Legierung in Berührung kommt, findet eine schnelle Diffusion von Aluminium in das Grundmetall statt. Gleichzeitig wird aber das Aluminium (oder eine aluminiumreiche Legierung) infolge der niedrigeren Dichte fortlaufend zur Innenseite des Rohrs gedrückt. Deshalb beeinflussen die folgenden Parameter die endgültige Stärke der aluminiumlegierten Schicht auf der inneren Oberfläche des Rohrs :

1. Die Temperatur des Metalls, das legiert wird, und die Temperatur des Metalls, mit dem legiert wird. Wenn die Temperatur höher ist, dann ist auch die Diffusionsgeschwindigkeit höher und die erreichte aluminiumlegierte Schicht um so dicker.

2. Die Rotationsgeschwindigkeit der Schleudergußform. Wenn die Geschwindigkeit höher ist, dann ist der Grad der zentrifugalen Trennung ebenfalls größer, wodurch die aluminiumlegierte Schicht dünner wird.

3. Die Zeitverzögerung bis zum Eingießen des zweiten Metalls. Wenn die Zeitverzögerung größer ist, dann nimmt die Temperatur des geschmolzenen Substrats ab, weshalb sich die Dicke der aluminiumreichen Schicht verringert.

4. Die Menge des zugegossenen Aluminiums.

5. Die Dicke der Beschichtung der Schleudergußform und die Formwandtemperatur. Je dicker die genannte Schicht ist, desto kleiner ist die Abkühlgeschwindigkeit. Je dicker also diese Schicht ist und je höher die Formwandtemperatur liegt, desto dicker wird die Aluminiumdiffusionsschicht.

Das Vorliegen von mehreren Verfahrensparametern, die das Verfahrens in entgegengesetzter Weise beeinflussen, ermöglicht es, die Dicke der legierten Schicht zu regeln, auch dann, wenn einer der Parameter nicht geändert werden kann. Wenn beispielsweise die Gießtemperatur des zu legierenden Metalls sehr hoch liegt (um beispielsweise eine Ausbreitung des Metalls in langen Rohren zu gestatten), kann die Veränderung der anderen Parameter dazu dienen, die erforderliche Dicke der Diffusionsschicht zu erreichen.

Das Ergebnis des erfindungsgemäßen Verfahrens ist in Figur 3 zu sehen, wo die Aluminiumdiffusionsschicht mit 16 bezeichnet ist.

Die Figuren 4 und 5 zeigen Mikrofotografien eines Schnitts durch ein nach dem erfindungsgemäßen Verfahren hergestellten Rohrs. Die Zone A in Figur 4 besteht überwiegend aus Nickelaluminiden und Eisenaluminiden. Bei Anwendung von Röntgenbeugungstechniken konnten keine komplexen Ni-Fe-Aluminide gefunden werden. Die Zone B besteht aus Ni- und Fe-Aluminiden, etwas Austenit und $Cr_{23}C_6$-Carbiden. Die Aluminide in der Zone B haben anscheinend einen niedrigeren Al-Gehalt. Das Metall in der Zone C besitzt die übliche Struktur einer Fe-Ni-Cr-C-Legierung hoher Wärmebeständigkeit (Austenit plus primäre $Cr_{23}C_6$-Carbide).

Wie aus Figur 4 ersichtlich ist, ist die Schicht A ungleichförmig. Sie kann entfernt oder geglättet werden, wenn es die spätere Anwendung des Schleudergußgegenstands erfordert.

Es wurde festgestellt, daß die Schicht A (Figur 4) in der Luft zerfällt. Fünf Wochen nach der Herstellung des Rohrs war die Zone A auf der Innenseite des Gußstücks nicht mehr vorhanden. Stattdessen konnte die glatte Oberfläche der Zone B beobachtet werden (Figur 5).

Eine Auflösung von Legierungen mit einer Zusammensetzung, die derjenigen der Zone A ähnlich sind, ist bereits in der US-Patentschriff 4 175 954 beschrieben. Aluminiumcarbide, die in der Struktur von « Raney »-Legierungen vorhanden sind, zersetzen sich durch Reaktion mit Wasserdampf. Das aufgrund der Reaktion gebildete Gas verursacht offensichtlich innere Spannungen, welche zu einer Auflösung der Legierungsschicht führen. Auch im Falle der vorliegenden Erfindung konnte aufgrund von Acytlengeruch eine Gasbildung beobachtet werden.

Eine vollständige « Selbstreinigung » der Rohre, die nach dem erfindungsgemäßen Verfahren hergestellt worden sind, tritt, nicht immer auf. Wenn man die Rohre einer wasserdampfgesättigten Atmosphäre beim Siedepunkt von Wasser aussetzt, wird der Zerfall beschleunigt. Die Zone A kann auch mit Salzsäure aufgelöst oder durch mechanische Maßnahmen, wie z. B. Schleifen, entfernt werden.

Der Schutz, der durch das Aluminisieren erreicht wird, resultiert aus dem Vorhandensein der Zone B. Versuche haben gezeigt, daß die Zone A gegen Zerfall stabilisiert wird, wenn man sie vier Stunden lang in der Atmosphäre auf 1 038 °C erhitzt. Eine solche stabilisierte Zone A erhöht den Schutz gegen Korrosion und Erosion.

Eine verbesserte Oberfläche der aluminisierten Schicht wie auch eine verbesserte innere Festigkeit dieser Schicht kann dadurch erreicht werden, daß man vor, während oder nach dem Eingießen des Aluminisierungsmetalls in die Form ein geschmolzenes Glas einbringt. Das geschmolzene Glas nimmt unerwünschte Verunreinigungen oder Verbindungen aus dem geschmolzenen Aluminium auf, welche die Qualität der Innenoberfläche störend beeinflussen.

Nachstehend wird ein Beispiel für eine solche Arbeitsweise angegeben.

59 kg einer hitzebeständigen Legierung wurden mit 1 566 °C in eine rotierende Schleudergußform eingebracht, die sich mit 1 350 U/min drehte, so daß die 75-fache Erdbeschleunigung entstand. Einige Augenblicke danach wurden 2,72 kg geschmolzenes Glas vom gegenüberliegende Ende der Form eingegossen. Vier Sekunden später wurden 1,81 kg der Legierung A 356, die eine Temperatur von 704 °C aufwies, von der gleichen Seite wie das Glas eingegossen. Nach dem Erstarren wurde das Rohr aus der Form entnommen.

Die Analyse der hitzebeständigen Legierung war wie folgt :

$$
\begin{array}{rl}
C &— 0,41\ \% \\
Mn &— 0,55\ \% \\
Si &— 0,96\ \% \\
Cr &— 24,9\ \% \\
Ni &— 19,5\ \% \\
W &— 0,51\ \% \\
Ti &— 0,33\ \% \\
Al &— 0,075\ \% \\
Fe &— Rest \\
&(52,765\ \%)
\end{array}
$$

Ein Schnitt durch das Gußstück zeigt, daß es eine innere Schicht aus einer Mischung von Glas und Aluminium (oder Nickel- und Eisenaluminiden), einer mittleren aluminisierten Schicht (0,381 mm dick) und einer äußeren Schicht aus der hitzebeständigen Legierung bestand. Die Übergangszone zwischen der aluminisierten Schicht und dem Grundmetall bestand aus sehr feinen Körnern und enthielt etwas aluminiumreiche Phase in den interdentrischischen Bereichen. Nach Entfernung der innersten gemischten Schicht wurde festgestellt, daß die darunterliegende aluminisierte Schicht außerordentlich glatt war.

Eine Prüfung der Mikrostruktur zeigt, daß keinerlei Schwundrisse vorhanden waren.

Die einwandfreie Struktur der aluminisierten Schicht und deren außergewöhnliche Glattheit haben ihren Grund in dem geschmolzenen Glas, das als Flußmittel wirkt und Verunreinigungen und unerwünschte Verbindungen aufnimmt, wodurch diese nach der Verfestigung leicht entfernt werden können.

Der Ausdruck « Glas » umfaßt jegliches geschmolzene Oxidsystem, welches gemäß der Erfindung als Flußmittel wirkt und Verunreinigungen und unerwünschte Verbindungen aus dem geschmolzenen Aluminium aufnimmt.

**Patentansprüche**

1. Verfahren zum Herstellen eines auf der inneren Oberfläche aluminisierten Schleudergußgegenstands aus einer Metallegierung, bei welchem eine geschmolzene Legierung in eine rotierende Schleuderform von einem Ende derselben eingegossen und in der Form auf gleichmäßige Wandstärke ausbreiten und erstarren gelassen wird, dadurch gekennzeichnet, daß vor dem Erstarren unter fortgesetzter Rotation der Form vom anderen Ende derselben auf die geschmolzene Legierung ein Aluminisierungsmetall aufgegossen wird und daß nach dem Erstarren des Gußstücks die aluminisierte Oberfläche der Legierung dadurch freigelegt wird, daß die darüberliegende Schicht zersetzt oder zersetzen gelassen oder anderweitig entfernt wird.

2. Verfahren nach Anspruch 1, dadurch gekennzeichnet, daß die zu aluminisierende Legierung eine hitzebeständige chromhaltige Eisenlegierung ist.

3. Verfahren nach Anspruch 1 oder 2, dadurch gekennzeichnet, daß die Dicke der aluminisierten Zone durch die Wahl der Gießtemperatur, der Rotationsgeschwindigkeit der Form, der Zeitverzögerung bis zum Eingießen des Aluminisierungsmetalls, der Menge des Aluminisierungsmetalls, der Temperatur der Formwand und der Dicke der Isolierschicht auf der Formwand beeinflußt wird.

4. Verfahren nach einem der Ansprüche 1 bis 3, dadurch gekennzeichnet, daß vor, während oder nach dem Eingießen des Aluminisierungsmetalls in die Form ein geschmolzenes Glas eingegossen wird, wobei durch entsprechende Wahl der Rotations- und Gießbedingungen dafür gesorgt wird, daß das geschmolzene Glas die innere Oberfläche des Gußstücks erreicht.

**Claims**

1. A method of producing a centrifugal casting of a metal alloy aluminized at its inner surface by introducing a molten alloy into a rotating centrifugal mold at one end thereof and allowing the alloy to obtain a uniform wall thickness and to solidify, characterized in that under continued rotation and before the alloy is solidified an aluminizing metal is cast onto the molten alloy from the opposite end of the mold and that after solidification of the casting the aluminized surface of the alloy is uncovered by disintegrating the layer thereupon, allowing it to disintegrate or removing it in another way.

2. A method according to claim 1, characterized in that the metal to be aluminized is a heat-resistant ferrous alloy containing chromium.

3. A method according to claim 1 or 2, characterized in that the thickness of the aluminized zone is controlled by preselecting pouring temperatures, rotational speed of the mold, time delay in pouring the aluminizing metal, amount of the aluminizing metal, mold wall temperature, and thickness of insulating layer on the mold wall.

4. Process according to one of claims 1 to 3, characterized in that before, during or after pouring the aluminizing metal a molten glass is poured into the mold selecting conditions of rotating and pouring in such a manner that the molten glass migrates to the inner surface of the casting.

**Revendications**

1. Procédé de fabrication d'un objet coulé par centrifugation, aluminié sur sa surface interne, à partir d'un alliage métallique, dans lequel on coule un alliage fondu, dans un moule centrifuge tournant, par une extrémité de celui-ci et on le laisse se répandre et se solidifier dans le moule en une épaisseur de paroi uniforme, caractérisé en ce qu'avant la solidification, en continuant de faire tourner le moule, on coule par l'autre extrémité de celui-ci un métal d'aluminiage sur l'alliage fondu, et qu'après la solidification de la pièce coulée on libère la surface aluminiée de l'alliage en décomposant, en laissant se décomposer ou en éliminant d'une autre façon la couche susjacente.

2. Procédé selon la revendication 1, caractérisé en ce que l'alliage à aluminier est un alliage de fer résistant à la chaleur contenant du chrome.

3. Procédé selon l'une des revendications 1 et 2, caractérisé en ce que l'épaisseur de la zone aluminiée est influencée par le choix de la température de coulée, de la vitesse de rotation du moule, du délai jusqu'à la coulée du métal d'aluminiage, de la quantité de métal d'aluminiage, de la température de la paroi du moule et de l'épaisseur de la couche isolante sur la paroi du moule.

4. Procédé selon l'une des revendications 1 à 3, caractérisé en ce qu'on coule dans le moule un verre fondu avant, pendant ou après la coulée du métal d'aluminiage, en faisant en sorte, par un choix approprié des conditions de rotation et de coulée, que le verre fondu atteigne la surface interne de la pièce moulée.

FIG-1

FIG-2

FIG-3

_FIG_- 4

→|3,175|← mm

→|3,175|← mm

_FIG_- 5

2